# EUROPEAN PATENT SPECIFICATION

(11) **EP 3 795 291 B1**
(45) Date of publication and mention of the grant of the patent: **30.08.2023**
(21) Application number: 20275139.2
(22) Date of filing: 09.09.2020
(51) Int. Cl.: B23P 19/08

(54) **GAITER FITTING DEVICE**
GAMASCHENBEFESTIGUNGSVORRICHTUNG
DISPOSITIF DE FIXATION DE GUÊTRE

(30) Priority: 19.09.2019 GB 201913505
(43) Date of publication of application: 24.03.2021
(73) Proprietor: Bailcast Limited, Chorley, Lancashire PR6 7BX (GB)
(72) Inventor: SWIRES, Robert, Chorley, Lancashire PR6 7BX (GB)
(74) Representative: Wilson Gunn

(56) References cited:
- WO-A2-03/018265
- DE-A1-102008 057 413
- DE-A1-102019 122 256
- FR-A1- 3 100 730
- GB-A- 2 580 992
- US-A1- 2004 261 238

## Description

### Technical Field of the Invention

The present invention relates to a gaiter fitting device used to apply flexible gaiters (also known as boots) to joints, particularly, but not exclusively, constant velocity joints in vehicles and joints between axles and drive shafts.

### Background to the Invention

DE 10 2008 057 413 A1 discloses a gaiter fitting device which uses a pneumatic piston and cylinder assembly to spread arms around which a gaiter is placed to fit the gaiter to a joint. The piston is moved using compressed air, and a pressure relief valve is incorporated into a handle of the device adjacent a user operable valve so as to prevent over pressurisation and hence device failure (which could cause injury to an operator).

A problem with this device is that the pressure relief valve protrudes from the device, rendering it susceptible to damage. It is also accessible to a user and so there is a risk that a user may tamper with or replace it, potentially making the device dangerous to operate. Additionally, the user may not operate the valve in time, and thus may allow the device to over stretch the gaiter, or otherwise damage the device itself.

In other existing gaiter fitting devices, a single use pressure relief valve is included. In the event that the pressure relief valve is triggered these devices require disassembly, component replacement or specialist repair to restore normal function.

With reference to GB2580992A, FR3100730A1 and DE102019122256A1, the applicant has voluntarily amended the scope of this application for the United Kingdom, France and Germany by submitting separate claims for these states.

It is the object of embodiments of the present invention to provide a gaiter fitting device which addresses the problems associated with existing devices.

### Summary of the Invention

According to a first aspect of the present invention, there is provided a gaiter fitting device comprising a pneumatic actuator operable between a first position and a second position, a plurality of pivotally mounted arms arranged to receive and spread a gaiter and characterised by a feature arranged to permit a pneumatic fluid driving the actuator to escape when the actuator passes a predetermined position between the first and second positions, thereby to limit the pressure of pneumatic fluid driving the actuator, wherein the feature is inherently reset when the actuator is returned to the first position and so enables a user to continue to use the device after the feature has allowed fluid to escape.

The feature permitting fluid to escape reduces the risk of over-pressurisation of the device and therefore obviates the need for a separate pressure relief valve and thus the problems associated with pressure relief valves.

The device may comprise a resilient arrangement which resists movement of the pneumatic actuator towards the second position. The resilient arrangement may only resist movement of the pneumatic actuator after the pneumatic actuator moves beyond the predetermined position. In one embodiment, the resilient arrangement is positioned so that it is contacted by the pneumatic actuator when it moves beyond the predetermined position.

The resilient arrangement may comprise a stop and a resilient member. The resilient member may be comprised in the stop. The stop may be separate from the resilient member. The resilient member may be a body of resilient material, such as rubber or synthetic rubber. The stop may prevent movement of the pneumatic actuator beyond the second position. The resilient member may be placed between the pneumatic actuator and the stop. In other embodiments, the resilient member may not be placed between the stop and the pneumatic actuator.

Provision of a resilient arrangement serves to prevent movement of the actuator to a position at which pneumatic fluid is allowed to escape unless the actuator provides sufficient force to overcome a bias provided by the resilient arrangement, and therefore effectively establishes a threshold pneumatic fluid pressure above which fluid is allowed to escape (when no other load is provided on the actuator). As such the resilient arrangement allows the pneumatic actuator, in conjunction with the feature, to act as a pressure relief valve.

There may be an end fitting disposed in the gaiter fitting device. The end fitting may comprise a stop, which may be the stop of the resilient arrangement. The gaiter fitting device may comprise a generally hollow body with an open end. The end fitting may be fitted into the open end of the body. In some embodiments, the end fitting may have a resilient region which forms the resilient member of the resilient arrangement. The end fitting may provide both the stop and/or the resilient member of the resilient arrangement.

One end of each arm may extend out of the device to a free end. An opposite end of each arm, beyond the point about which the arm can pivot, may contact an abutment surface comprised in the pneumatic actuator. Arranging for an end of the arm, beyond the pivot point, to contact the abutment surface serves to maximise leverage available to the actuator in driving the arms. The abutment surface may be substantially frustro-conical.

The pneumatic actuator may be hollow and open ended to permit a shaft over which a gaiter is to be fitted to be received into the pneumatic actuator during use of the device.

The resilient member may be disposed between the pneumatic actuator and the stop. The resilient member may be an O-ring. The O-ring may be mounted on the pneumatic actuator. The O-ring may be mounted on the stop. The O-ring may be disposed within the region between the stop and pneumatic actuator, and attached to neither the pneumatic actuator nor the stop.

The pneumatic actuator may comprise a piston and cylinder assembly. The feature may be at least one port formed in the cylinder to allow pneumatic fluid to escape from behind the piston. The or each port may be a channel formed in the cylinder, such as in the cylinder wall. The channel may extend axially in the cylinder wall to allow pneumatic fluid to bypass the piston when the piston is positioned within the length of the channel. Provision of a channel or other port in a cylinder wall is a simple, robust and economical way to include a safety pressure relief function into the device, as compared to inclusion of a conventional pressure relief valve.

The piston may comprise a fitting to receive a suitable tool by which the piston can be rotated within the cylinder. The fitting may be a slot or other recess or projection for receiving the head of a screwdriver or other suitable connection tool. A suitable connection tool may be an allen key/driver, torx driver/key or the like. Provision of this fitting allows the user to rotate the piston and even out the wear caused by arms contacting the piston, thus enhancing the working life of the device.

The device may comprise a handle. The handle may comprise a hook. The handle may be detachably fitted to the device. The hook may have a substantially flat outer surface, allowing it to serve as a stand. The hook allows the user to hang the device from a suitable support, and also to place it on a surface in an upright position. This provides extra convenience for the user.

The handle may extend at an angle from the axis of the pneumatic actuator. Advantageously, this prevents the device from rolling when placed on a surface.

### Detailed Description of the Invention

In order that the invention may be more clearly understood one or more embodiments thereof will now be described, by way of example only, with reference to the accompanying drawings, of which:
- Figure 1: is a side view of the gaiter fitting device in a first state;
- Figure 2: corresponds to Figure 1, with the device in a second state;
- Figure 3: is a partial cross section along the line III-III of Figure 1;
- Figure 4: is a partial cross section along the line IV-IV of Figure 2;
- Figure 5: correspond to Figure 4, but with the device in a third state;
- Figure 6: shows an exploded perspective view of the device and its components.

Referring to the drawings, a gaiter fitting device 1 comprises a body 2. In this embodiment, the body 2 is substantially frustro-conical, but with a domed outer surface. The larger end 3 of the body 2 is open. The smaller, opposite end 4 of the body 2 is detachably fitted with a handle 5. The body 2 and handle 5 are separately moulded from a plastics material. A suitable material is glass filled nylon.

The larger end 3 of the body 2 opens into a substantially cylindrical bore 6 which extends over approximately a quarter of its length and has a diameter of approximately 80% of the maximum outside diameter of the body 2. One or more axially extending channels 7 are formed in the bore 6, extending from the end of the bore 6 towards the open end of the body 2 over about half of the length of the bore 6, the purpose of which is described further below.

A first, substantially cylindrical, counterbore 8 extends from the bore 6 towards the open end 3 of the body 2 with a diameter approximately 20% larger than the diameter of the bore 6 and a length about two thirds that of the bore 6.

A second, substantially frustroconical, counterbore 9 extends from the first counterbore 8 to the open end 3 of the body 2. The second counterbore 9 has a diameter approximately 5% larger than that of the first counterbore 8 adjacent the counterbore 8, which increases slightly towards the open end 3 of the body 2, and a length approximately half that of the bore 6.

Beyond the bore 6, further into the body 2, the inside wall of the body 2 extends radially inwardly through a continuous elongate s-shaped curve 10 to a shoulder 12 which forms the end of a second, smaller, coaxial, substantially cylindrical bore 11 with a diameter approximately one third of that the larger bore 6. The elongate s-shaped curve 10 connects the bores 6 and 11. The smaller bore 11 opens out to the smaller end 4 of the body 2 and has a length about that of the larger bore 6. The inner cylindrical wall of the smaller bore 11 is threaded and the bore forms a fitting 13 for receiving the handle 5.

The handle 5 comprises a generally cylindrical, hollow, open ended, externally threaded fitting 14 for connection to the fitting 13 of the body 2. A washer 15 is disposed between the end of the handle 5 and the shoulder 12 at the end of the bore 11 to form an airtight seal between the handle 5 and the body 2.

The handle further comprises an elongate portion 16 the long axis of which is disposed at angle of approximately 45° to that of the fitting 14 of the handle 5, and thus (when the handle 5 is fitted to the body 2 of the tool) the axis of the bores 6,11. This provides ergonomic benefit to the user, and also prevents the device 1 from rolling when placed on a surface.

An elongate bore 17 extends from the fitting 14, along the length of the handle 5 and communicates with a larger counterbore (not shown) at the opposite end of the handle 5. A hose fitting (not shown) is fitted to the counterbore to allow a releasable fluid connection to a pneumatic hose.

A user operable on-off valve 18 is disposed on the handle 5 at a point approximately 20% along the length of the handle 5 from the fitting. The valve 18 allows the user to selectively permit or prevent flow of fluid through the bore 15.

The elongate portion 16 of the handle 5 is sized and shaped to allow a user to grip it with a single hand and comprises a webbed support structure 19. In this embodiment the webbed support structure 19 comprises moulded support webs 19a, which define an array of recesses 20. In this embodiment, the recesses are hexagonal.

The handle 5 also comprises a hook 21. The hook 21 extends from the end face of the handle 5 opposite to the fitting 14, forming a u-shape with the handle 5. This allows a user to hang the device 1 on a suitable support, such as a wall fitting or from a belt. The hook 21 also serves as a stand. Its substantially flat outer surface allows the gaiter fitting device 1 to balance on a suitable surface, such as a table. This provides extra convenience, as when the device 1 is rested upon the hook 21, the handle 5 will be presented to the user in manner that allows them to easily pick up the device 1.

At the larger end 3 of the body 2, an end fitting 22 is mounted in the first and second counterbores 8,9. The fitting may be moulded from a plastics material. A suitable material is glass filled nylon. The fitting 22 comprises an annular plate 22a. This sits in the second counterbore 9 and has a peripheral edge sized and shaped to have a close fit within the counterbore 9, and an inside diameter approximately that of the smaller bore 11. A cylindrical portion 23 extends from behind the endplate to sit in the first counterbore 8. The outer diameter of the cylindrical portion 23 is just less than that of the first counterbore 8 to ensure a close fit and the inner diameter approximates to that of the bore 6, forming an extension to the bore 6. A plurality of circumferentially spaced triangular support ribs 24 extend between the inside of the cylindrical portion 23 and the inside of the endplate 23. The end fitting 22 is affixed to the body 2 by suitable fastening means. In this embodiment, the fastening means is a set of eight screws 25, extending axially through respective apertures distributed evenly around the endplate 23, and into the shoulder in the body 2 formed by the first counterbore 8. Alternate suitable fastening means are available.

Eight elongate metallic arms 26 are each pivotally mounted to a respective shaft (not shown) retained in a respective radial slot 27 extending from the outside edge of the end fitting 22. The slots 27 are spaced evenly around the end fitting 22. The arms 26 pivot about a point about a sixth of the way along their length. A shorter S-shaped section of each arm 26 extends radially inwardly and into the body 2. The remainder of the arm 26 extends, with a much more elongate double curve, away from the body 2. Each arm 26 is mounted to pivot about an axis tangential to the endplate 23.

A piston 28 is disposed in the bores 6,11 in the body 2. The piston 28 is moulded from a plastics material, a suitable material being polyamide (Nylon). The piston 28 is substantially circular in cross-section and formed by a hollow body 2 with a larger open end 29 and a smaller closed end 30.

The closed end 30 of the piston 28 has an end face 31. The inner surface of the end face 31 is domed. To the outside there are eight radially extending ribs 32 spaced evenly around the end face, each with a substantially straight edge lying in the same plane as a central substantially circular, flat surface of diameter about half that of the end face in the centre of which is formed a slot (not shown) for receiving a screwdriver. Any suitable fitting may be provided for receiving a tool with which to rotate the piston 28.

A generally frustroconical region 33 of substantially constant thickness extends, and increases in diameter, away from the closed end 30 of the piston 28, at an angle of approximately 10° to the axis of the piston 28. The axial length of the frustroconical region 33 is slightly less than the length of the bore 11.

Beyond the frustroconical region 33, the wall of the piston 28 extends through a continuous elongate s-shaped curve 34, forming a radial region which curves into an axial region.

A set of supporting ribs 35 is formed, evenly spaced, around the outside of the concave part of the elongate s-shaped curve 34. The outside edges of the ribs 35 are concave and substantially match the profile of the elongated s-shaped curve 10 which connects the two bores 6,11 in the body 2.

In the axial region, the wall thickness increases in a step 36 and then gradually reduces, forming a portion with wedge shaped cross-section 37. The outside surface of the portion 37 is substantially cylindrical having a diameter approximately 90% of the diameter of the bore 6 and extends axially over a length about a quarter of that of the bore 6 to the open end 29 of the piston 28. The inside surface decreases in diameter towards the open end 29, with a slight convex curve 38. A concave channel 40 is formed around the axial surface at the open end 29 of the piston 28 and a resilient O-ring 40 is mounted in the channel 40. A radially projecting shoulder 41 is formed around the outside edge of the cylindrical portion of the piston 28 adjacent its open end 29. Behind the shoulder 41 an annular sealing ring 42 is mounted to the cylindrical outer surface of the piston 28. The projecting shoulder 41 has an outside diameter with gives a close sliding fit within the bore 6. The sealing ring 42 is urged resiliently into contact with the bore 6 to form a seal.

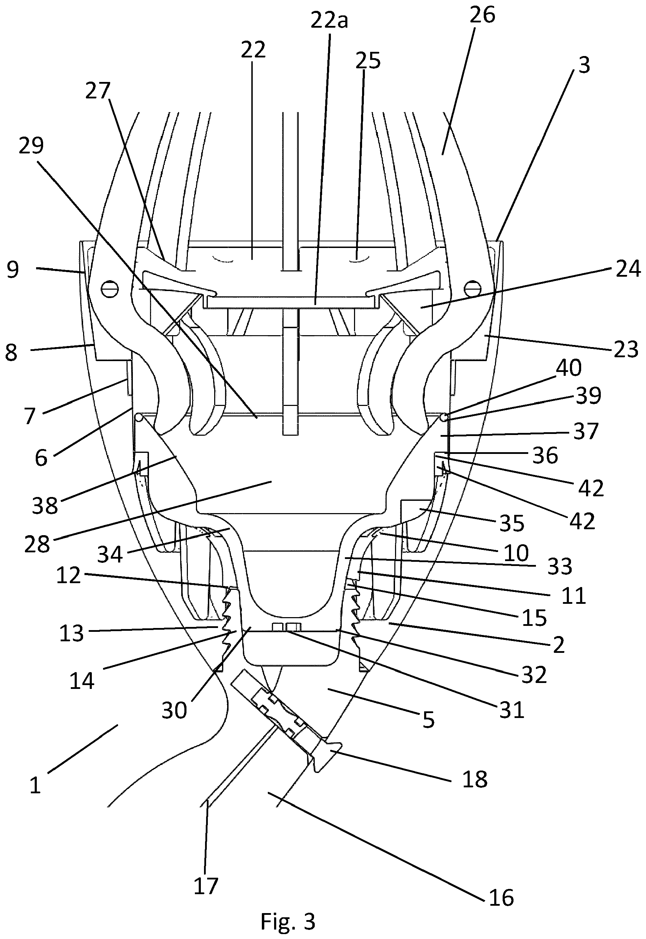

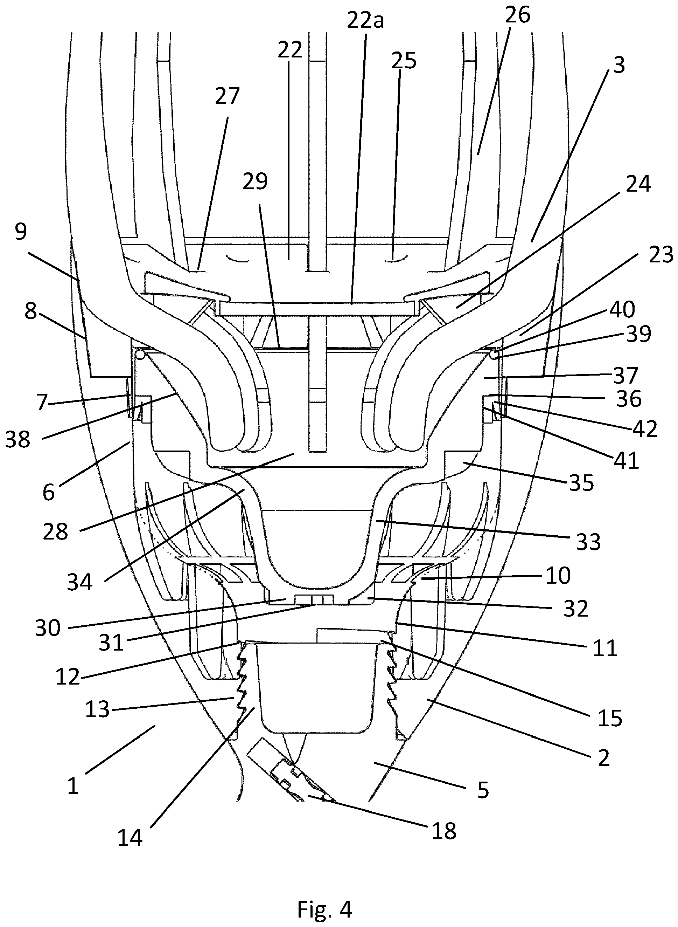

The piston 28 is movable between a retracted position shown in figure 3 and a deployed position shown in figure 4.

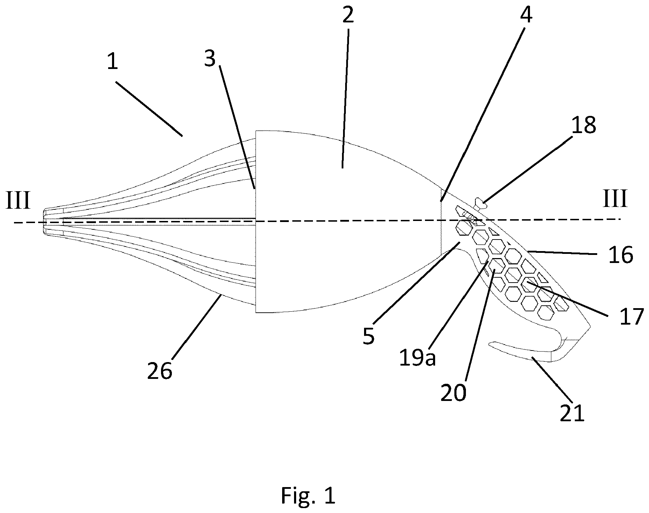

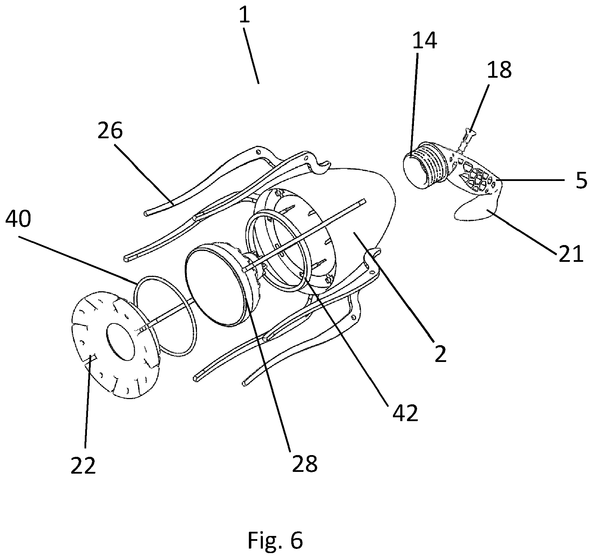

In the retracted position, the ribs 35 on the convex curve on the outside of the piston 28 abut the corresponding part of the s-shaped curve 10 on the inside of the body 2, and there is a gap between the end face 31 of the piston 28 and the inside end of the fitting 14 of the handle 5. With the piston 28 in this position the arms 26 can adopt the configuration shown in figures 1, 3 and 6, the ends of the arms 26 inside the body 2 bearing on the inside surface 38 of the piston 28 adjacent the open end 29 of the piston 28.

When in the retracted position, the user can disconnect the handle 5 and engage a screwdriver, or other appropriate tool, with the slot in the end face 31 of the piston 28. The user can rotate the tool and hence the piston 28 from time to time and in order to even out the wear on the inner surface 38 of the piston 28 caused through contact with the arms 26.

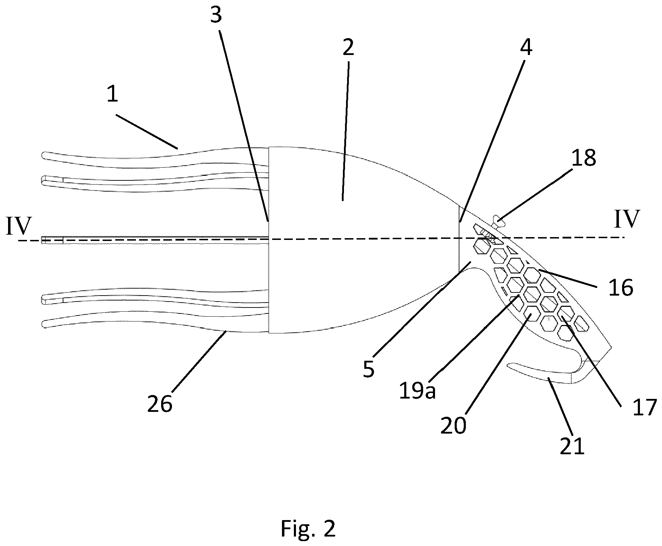

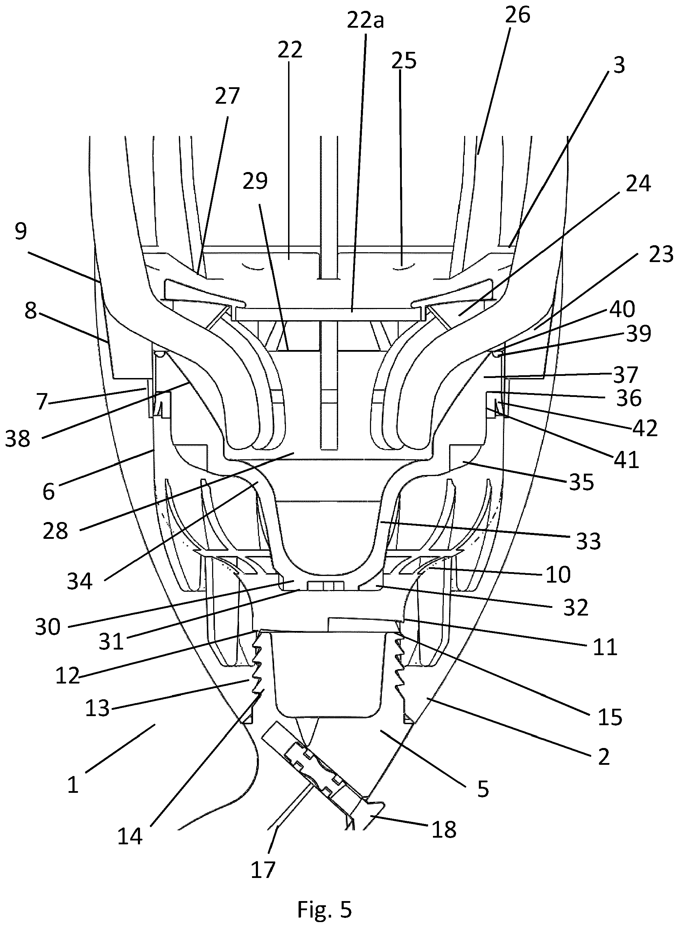

In the deployed position, the O-ring 40 disposed in the channel 40 in the open end 29 of the piston 28 abuts and compresses against a surface of the end fitting 22. In this position the arms 26 adopt the configuration shown in figures 2, 4, 5 and 7, the ends of the arms 26 inside the body 2 bearing on the inside surface 38 of the piston 28 at the thickest end of the wedge shaped portion 37 of the piston 28. In the deployed position the annular seal 42 of the piston 28 is just past the end of the or each channel 7 in the bore 6, allowing air to pass through the channel(s) 7 from one side of the piston 28 to the other.

In use, with the gaiter fitting device 1 in the state shown in figures 1 and 2, that is, with the arms 26 in their closed configuration and the piston 28 in its fully retracted position, a user places a gaiter to be fitted to a drive shaft around the arms 26. A compressed air supply hose (not shown) is connected (if not already connected) to the hose fitting disposed in the counterbore in the handle 5. The user operable valve 18 is opened to allow compressed air to flow through the bore 17 in the handle 5 and into the bores 6,11 in the body 2, behind the piston 28. The increasing pressure forces the piston 28 towards the deployed position. As this happens, the inner surface 38 adjacent the open end 29 of the piston 28 contacts the ends of the arms 26 and moves them radially inwards such that the opposite ends of the arms 26 outside the body 2, move radially outwards, stretching the gaiter. The elasticity of the gaiter will oppose the spreading of the arms 26, but the pneumatic pressure behind the piston 28 should be sufficient to overcome this. As the piston 28 contacts the ends of the arms 26, this maximises leverage and thus minimises, for a given set of arms 26, the amount of force that need be applied by the piston 28 in order to spread the opposite ends of the arms 26.

As the piston 28 moves away from the fitting 12, the O-ring 40 disposed within the channel 40 at the open end 29 of the piston 28 will contact the end fitting 22. With the piston 28 in this position the seal 42 contacts the bore 6 just beyond the end of the or each channel 7 in the bore 6. Contact between the O-ring 40 and the end fitting 22 increases the force resisting further movement of the piston 28. If the pressure of air available from the air supply is sufficient to overcome this force, and if the valve 18 remains open, increased air pressure behind the piston 28 will urge the piston 28 further towards the deployed position, compressing the O-ring 40 against the end fitting 22. This further movement results in the seal 42 moving past the end of the or each channel 7, enabling compressed air to escape from behind the piston 28 and vent to atmosphere through the front of the device 1. This prevents air pressure building up in the tool behind the piston 28 to an un-safe level in the event that a user does not close the valve 18.

In practice, if the valve 18 is not closed the piston 28 will reach an equilibrium position, depending on the pressure of the air supply, the size of the air passage through the valve 18, the size and position of the or each channel 7, the strength of any gaiter being stretched and the stiffness of the O-ring 40. The size and position of the or each channel 7 and the stiffness of the O-ring 40 is therefore chosen so that, even with no gaiter fitted, the internal pressure in the device 1 cannot exceed a threshold level when connected to a compressed air supply with a pressure that exceeds a typical maximum pressure for a workshop air supply by a chosen safety margin. Thus, the inclusion of channel(s) 7 and a resilient stop for the piston 28, in this case provided by the O-ring 40, conveniently provides a safety pressure relief arrangement which automatically resets. The simplicity and robustness of the arrangement allows a user to repeatedly trigger the pressure relief function during normal use of the device 1 without impairing the function of the device 1 or pressure relief arrangement. Since release of excess pressure is triggered by the position of the piston 28 it is difficult or impossible for a user to try and defeat operation of the pressure relief feature.

When the piston 28 stops moving, or earlier at a point when the gaiter is sufficiently spread, the user closes the valve 18 and disconnects the pneumatic hose. If, when the valve 18 is closed, air is escaping via the channel(s) 7 the piston 28 will move towards the retracted position under the influence of the O-ring 40 and gaiter until the pressure of air trapped behind the piston 28 falls sufficiently that the seal 42 moves beyond the end of the or each channel 7. At this point the escape of air is substantially eliminated and the piston 28 remains in position keeping the gaiter in an expanded state.

The gaiter can then be placed over a joint in a shaft over which it is to be fitted. During this process a free end of the shaft is received into the body 2 of the device 1 and into the piston 28 to allow the gaiter to be positioned a sufficient distance from the free end of the shaft.

When the gaiter is correctly positioned over the joint, the user opens the valve 18 allowing escape of air from behind the piston 28 through the handle 5 and out of the hose fitting. The resilience of the gaiter will force the arms 26 towards their closed configuration, urging the piston 28 back to its fully retracted position, leaving the gaiter partially fitted to the joint.

The gaiter fitting device 1 is then withdrawn, allowing the gaiter to contract around the joint. The process is then complete and can be repeated.

The one or more embodiments are described above by way of example only. Many variations are possible without departing from the scope of protection as defined by the appended claims.

## Claims (Claims for the following Contracting State(s): AT,BE,CH,DK,ES,GR,IT,LI,LU,NL,SE,MC,PT,IE,SI,LT,LV,FI,RO,MK,CY,AL,TR,BG,CZ,EE,HU,PL,SK,BA,HR,IS,MT,NO,RS,ME,SM,MD)

1. A gaiter fitting device (1) comprising a pneumatic actuator operable between a first position and a second position, a plurality of pivotally mounted arms (26) arranged to receive and spread a gaiter and **characterised by** a feature arranged to permit a pneumatic fluid driving the actuator to escape when the actuator passes a predetermined position between the first and second positions, thereby to limit the pressure of pneumatic fluid driving the actuator, wherein the feature is inherently reset when the actuator is returned to the first position and so enables a user to continue to use the device after the feature has allowed fluid to escape.

2. A device (1) as claimed in claim 1 comprising a resilient arrangement which resists movement of the pneumatic actuator towards the second position.

3. A device (1) as claimed in claim 2 wherein the resilient arrangement only resists the movement of the pneumatic actuator after the pneumatic actuator moves beyond the predetermined position.

4. A device (1) as claimed in either claim 2 or 3 wherein the resilient arrangement comprises a stop and a resilient member.

5. A device (1) as claimed in claim 4 wherein the stop prevents movement of the pneumatic actuator beyond the second position.

6. A device (1) as claimed in either claim 4 or 5 comprising an end fitting (22) wherein the end fitting (22) comprises the stop.

7. A device (1) as claimed in any of claims 4, 5 or 6 wherein the resilient member is disposed between the pneumatic actuator and the stop.

8. A device (1) as claimed in any of claims 4, 5, 6 or 7 wherein the resilient member comprises an O-ring (40).

9. A device (1) as claimed in any preceding claim wherein the pneumatic actuator comprises a piston (28) and cylinder (6,11) assembly.

10. A device (1) as claimed in claim 9 wherein the piston (28) comprises a fitting to receive a suitable tool by which the piston (28) can be rotated within the cylinder (6,11).

11. A device (1) as claimed in claim 10 wherein the fitting is a slot for receiving the head of a suitable connection tool.

12. A device (1) as claimed in any of claims 9, 10 or 11 wherein the feature comprises at least one port formed in the cylinder (6) to allow pneumatic fluid to escape from behind the piston (28).

13. A device (1) as claimed in claim 12 wherein the or each port comprises a channel (7) formed in the cylinder (6).

14. A device (1) as claimed in any preceding claim further comprising a handle (5) which comprises a hook (21).

15. A device (1) as claimed in claim 14 wherein the handle (5) is detachably fitted to the device (1).

## Claims (Claims for the following Contracting State(s): GB, DE, FR)

1. A gaiter fitting device (1) comprising a pneumatic actuator operable between a first position and a second position, a plurality of pivotally mounted arms (26) arranged to receive and spread a gaiter and **characterised by** a feature arranged to permit a pneumatic fluid driving the actuator to escape when the actuator passes a predetermined position between the first and second positions, thereby to limit the pressure of pneumatic fluid driving the actuator, wherein the pneumatic actuator comprises a piston (28) and cylinder (6,11) assembly, and the feature comprises at least one port formed in the cylinder (6) to allow pneumatic fluid to escape from behind the piston (28).

2. A device (1) as claimed in claim 1 comprising a resilient arrangement which resists movement of the pneumatic actuator towards the second position.

3. A device (1) as claimed in claim 2 wherein the resilient arrangement only resists the movement of the pneumatic actuator after the pneumatic actuator moves beyond the predetermined position.

4. A device (1) as claimed in either claim 2 or 3 wherein the resilient arrangement comprises a stop and a resilient member.

5. A device (1) as claimed in claim 4 wherein the stop prevents movement of the pneumatic actuator beyond the second position.

6. A device (1) as claimed in either claim 4 or 5 comprising an end fitting (22) wherein the end fitting (22) comprises the stop.

7. A device (1) as claimed in any of claims 4, 5 or 6 wherein the resilient member is disposed between the pneumatic actuator and the stop.

8. A device (1) as claimed in any of claims 4, 5, 6 or 7 wherein the resilient member comprises an O-ring (40).

9. A device (1) as claimed in any preceding claim wherein the piston (28) comprises a fitting to receive a suitable tool by which the piston (28) can be rotated within the cylinder (6,11).

10. A device (1) as claimed in claim 9 wherein the fitting is a slot for receiving the head of a suitable connection tool.

11. A device (1) as claimed in any preceding claim wherein the or each port comprises a channel (7) formed in the cylinder (6).

12. A device (1) as claimed in any preceding claim further comprising a handle (5) which comprises a hook (21).

13. A device (1) as claimed in claim 12 wherein the handle (5) is detachably fitted to the device (1).

## Patentansprüche (Patentansprüche für folgende(n) Vertragsstaat(en): AT,BE,CH,DK,ES,GR,IT,LI,LU,NL,SE,MC,PT,IE,SI,LT,LV,FI,RO,MK,CY,AL,TR,BG,CZ,EE,HU,PL,SK,BA,HR,IS,MT,NO,RS,ME,SM,MD)

1. Eine Gamaschenbefestigungsvorrichtung (1), umfassend einen pneumatischen Aktuator, der zwischen einer ersten Position und einer zweiten Position betrieben werden kann, umfassend eine Vielzahl von schwenkbar monierten Armen (26), die angeordnet sind, um eine Gamasche aufzunehmen und aufzuweiten und **gekennzeichnet durch** ein Merkmal, das angeordnet ist, um es einem den Aktuator antreibenden pneumatischen Fluid zu erlauben, zu entweichen, wenn der Aktuator eine vorab festgelegte Position zwischen der ersten und der zweiten Position passiert, um dadurch den Druck des den Aktuator antreibenden pneumatischen Fluids zu begrenzen, wobei das Merkmal inhärent zurückgesetzt wird, wenn der Aktuator in die erste Position zurückgebracht wird, und es somit einem Verwender ermöglicht, die Vorrichtung weiter zu verwenden, nachdem das Merkmal das Entweichen von Fluid zugelassen hat.

2. Vorrichtung (1) nach Anspruch 1, umfassend eine elastische Anordnung, die einer Bewegung des pneumatischen Aktuators in Richtung der zweiten Position Widerstand leistet.

3. Vorrichtung (1) nach Anspruch 2, wobei die elastische Anordnung der Bewegung des pneumatischen Aktuators erst dann Widerstand leistet, nachdem sich der pneumatische Aktuator über die vorab festgelegte Position hinaus bewegt hat.

4. Vorrichtung (1) nach Anspruch 2 oder 3, wobei die elastische Anordnung einen Anschlag und ein elastisches Bauteil umfasst.

5. Vorrichtung (1) nach Anspruch 4, wobei der Anschlag eine Bewegung des pneumatischen Aktuators über die zweite Position hinaus verhindert.

6. Vorrichtung (1) nach Anspruch 4 oder 5, umfassend eine Endbefestigung (22), wobei die Endbefestigung (22) den Anschlag umfasst.

7. Vorrichtung (1) nach einem der Ansprüche 4, 5 oder 6, wobei das elastische Bauteil zwischen dem pneumatischen Aktuator und dem Anschlag angeordnet ist.

8. Vorrichtung (1) nach einem der Ansprüche 4, 5, 6 oder 7, wobei das elastische Bauteil einen O-Ring (40) umfasst.

9. Vorrichtung (1) nach einem der vorhergehenden Ansprüche, wobei der pneumatische Aktuator eine Baugruppe mit Kolben (28)- und Zylinder (6,11) umfasst.

10. Vorrichtung (1) nach Anspruch 9, wobei der Kolben (28) eine Befestigung zur Aufnahme eines geeigneten Werkzeugs umfasst, mit dem der Kolben (28) im Zylinder (6,11) gedreht werden kann.

11. Vorrichtung (1) nach Anspruch 10, wobei die Befestigung ein Schlitz zur Aufnahme des Kopfes eines geeigneten Verbindungswerkzeugs ist.

12. Vorrichtung (1) nach einem der Ansprüche 9, 10 oder 11, wobei das Merkmal mindestens einen im Zylinder (6) ausgebildeten Anschluss umfasst, um das Entweichen von pneumatischem Fluid hinter dem Kolben (28) zuzulassen.

13. Vorrichtung (1) nach Anspruch 12, wobei der oder jeder Anschluss einen im Zylinder (6) gebildeten Kanal (7) umfasst.

14. Vorrichtung (1) nach einem der vorhergehenden Ansprüche, die weiterhin einen Griff (5) umfasst, der einen Haken (21) umfasst.

15. Vorrichtung (1) nach Anspruch 14, wobei der Griff (5) abnehmbar an der Vorrichtung (1) befestigt ist.

## Patentansprüche (Patentansprüche für folgende(n) Vertragsstaat(en): DE, GB, FR)

1. Eine Gamaschenbefestigungsvorrichtung (1), umfassend einen pneumatischen Aktuator, der zwischen einer ersten Position und einer zweiten Position betrieben werden kann, umfassend eine Vielzahl von schwenkbar monierten Armen (26), die angeordnet sind, um eine Gamasche aufzunehmen und aufzuweiten und **gekennzeichnet durch** ein Merkmal, das angeordnet ist, um es einem den Aktuator antreibenden pneumatischen Fluid zu erlauben, zu entweichen, wenn der Aktuator eine vorab festgelegte Position zwischen der ersten und der zweiten Position passiert, um dadurch den Druck des den Aktuator antreibenden pneumatischen Fluids zu begrenzen, wobei der pneumatische Aktuator eine Baugruppe mit Kolben (28)- und Zylinder (6,11) umfasst und wobei das Merkmal mindestens einen im Zylinder (6) ausgebildeten Anschluss umfasst, um das Entweichen von pneumatischem Fluid hinter dem Kolben (28) zuzulassen.

2. Vorrichtung (1) nach Anspruch 1, umfassend eine elastische Anordnung, die einer Bewegung des pneumatischen Aktuators in Richtung der zweiten Position Widerstand leistet.

3. Vorrichtung (1) nach Anspruch 2, wobei die elastische Anordnung der Bewegung des pneumatischen Aktuators erst dann Widerstand leistet, nachdem sich der pneumatische Aktuator über die vorab festgelegte Position hinaus bewegt hat.

4. Vorrichtung (1) nach Anspruch 2 oder 3, wobei die elastische Anordnung einen Anschlag und ein elastisches Bauteil umfasst.

5. Vorrichtung (1) nach Anspruch 4, wobei der Anschlag eine Bewegung des pneumatischen Aktuators über die zweite Position hinaus verhindert.

6. Vorrichtung (1) nach Anspruch 4 oder 5, umfassend eine Endbefestigung (22), wobei die Endbefestigung (22) den Anschlag umfasst.

7. Vorrichtung (1) nach einem der Ansprüche 4, 5 oder 6, wobei das elastische Bauteil zwischen dem pneumatischen Aktuator und dem Anschlag angeordnet ist.

8. Vorrichtung (1) nach einem der Ansprüche 4, 5, 6 oder 7, wobei das elastische Bauteil einen O-Ring (40) umfasst.

9. Vorrichtung (1) nach einem der vorhergehenden Ansprüche, wobei der Kolben (28) eine Befestigung zur Aufnahme eines geeigneten Werkzeugs umfasst, mit dem der Kolben (28) im Zylinder (6,11) gedreht werden kann.

10. Vorrichtung (1) nach Anspruch 9, wobei die Befestigung ein Schlitz zur Aufnahme des Kopfes eines geeigneten Verbindungswerkzeugs ist.

11. Vorrichtung (1) nach einem der vorhergehenden Ansprüche, wobei der oder jeder Anschluss einen im Zylinder (6) gebildeten Kanal (7) umfasst.

12. Vorrichtung (1) nach einem der vorhergehenden Ansprüche, die weiterhin einen Griff (5) umfasst, der einen Haken (21) umfasst.

13. Vorrichtung (1) nach Anspruch 12, wobei der Griff (5) abnehmbar an der Vorrichtung (1) befestigt ist.

## Revendications (Revendications pour l'(les) Etat(s) contractant(s) suivant(s): AT,BE,CH,DK,ES,GR,IT,LI,LU,NL,SE,MC,PT,IE,SI,LT,LV,FI,RO,MK,CY,AL,TR,BG,CZ,EE,HU,PL,SK,BA,HR,IS,MT,NO,RS,ME,SM,MD)

1. Dispositif d'installation de soufflet (1) comprenant un actionneur pneumatique capable de fonctionner entre une première position et une seconde position, une pluralité de bras montés à pivotement (26) agencés pour recevoir un soufflet et l'écarter et **caractérisé par** un équipement agencé pour permettre à un fluide pneumatique entraînant l'actionneur de s'échapper lorsque l'actionneur passe une position prédéterminée entre les première et seconde positions, limitant ainsi la pression de fluide pneumatique entraînant l'actionneur, dans lequel l'équipement est intrinsèquement réinitialisé lorsque l'actionneur est ramené à la première position et permet ainsi à un utilisateur de continuer à utiliser le dispositif après que l'équipement a permis au fluide de s'échapper.

2. Dispositif (1) selon la revendication 1, comprenant un agencement résilient qui résiste au déplacement de l'actionneur pneumatique vers la seconde position.

3. Dispositif (1) selon la revendication 2, dans lequel l'agencement résilient ne résiste au déplacement de l'actionneur pneumatique qu'après que l'actionneur pneumatique s'est déplacé au-delà de la position prédéterminée.

4. Dispositif (1) selon l'une ou l'autre des revendications 2 ou 3, dans lequel l'agencement résilient comprend une butée et un organe résilient.

5. Dispositif (1) selon la revendication 4, dans lequel la butée empêche le déplacement de l'actionneur pneumatique au-delà de la seconde position.

6. Dispositif (1) selon l'une ou l'autre des revendications 4 ou 5 comprenant un raccord d'extrémité (22), dans lequel le raccord d'extrémité (22) comprend la butée.

7. Dispositif (1) selon l'une des revendications 4, 5 ou 6, dans lequel l'organe résilient est disposé entre l'actionneur pneumatique et la butée.

8. Dispositif (1) selon l'une des revendications 4, 5, 6 ou 7, dans lequel l'organe résilient comprend un joint torique (40).

9. Dispositif (1) selon l'une des revendications précédentes, dans lequel l'actionneur pneumatique comprend un ensemble piston (28) et cylindre (6, 11).

10. Dispositif (1) selon la revendication 9, dans lequel le piston (28) comprend un raccord pour recevoir un outil approprié par lequel le piston (28) peut être mis en rotation à l'intérieur du cylindre (6, 11).

11. Dispositif (1) selon la revendication 10, dans lequel le raccord est une fente pour recevoir la tête d'un outil de raccordement approprié.

12. Dispositif (1) selon l'une des revendications 9, 10 ou 11, dans lequel l'équipement comprend au moins un orifice formé dans le cylindre (6) pour permettre au fluide pneumatique de s'échapper depuis l'arrière du piston (28).

13. Dispositif (1) selon la revendication 12, dans lequel le ou chaque orifice comprend un canal (7) formé dans le cylindre (6).

14. Dispositif (1) selon l'une des revendications précédentes comprenant en outre une poignée (5) qui comprend un crochet (21).

15. Dispositif (1) selon la revendication 14, dans lequel la poignée (5) est fixée de manière amovible au dispositif (1).

## Revendications (Revendications pour l'(les) Etat(s) contractant(s) suivant(s): GB, DE, FR)

1. Dispositif d'installation de soufflet (1) comprenant un actionneur pneumatique capable de fonctionner entre une première position et une seconde position, une pluralité de bras montés à pivotement (26) agencés pour recevoir un soufflet et l'écarter et **caractérisé par** un équipement agencé pour permettre à un fluide pneumatique entraînant l'actionneur de s'échapper lorsque l'actionneur passe une position prédéterminée entre les première et seconde positions, limitant ainsi la pression de fluide pneumatique entraînant l'actionneur, dans lequel l'actionneur pneumatique comprend un ensemble piston (28) et cylindre (6, 11), et l'équipement comprend au moins un orifice formé dans le cylindre (6) pour permettre au fluide pneumatique de s'échapper depuis l'arrière du piston (28).

2. Dispositif (1) selon la revendication 1, comprenant un agencement résilient qui résiste au déplacement de l'actionneur pneumatique vers la seconde position.

3. Dispositif (1) selon la revendication 2, dans lequel l'agencement résilient ne résiste au déplacement de l'actionneur pneumatique qu'après que l'actionneur pneumatique s'est déplacé au-delà de la position prédéterminée.

4. Dispositif (1) selon l'une ou l'autre des revendications 2 ou 3, dans lequel l'agencement résilient comprend une butée et un organe résilient.

5. Dispositif (1) selon la revendication 4, dans lequel la butée empêche le déplacement de l'actionneur pneumatique au-delà de la seconde position.

6. Dispositif (1) selon l'une ou l'autre des revendications 4 ou 5 comprenant un raccord d'extrémité (22), dans lequel le raccord d'extrémité (22) comprend la butée.

7. Dispositif (1) selon l'une des revendications 4, 5 ou 6, dans lequel l'organe résilient est disposé entre l'actionneur pneumatique et la butée.

8. Dispositif (1) selon l'une des revendications 4, 5, 6 ou 7, dans lequel l'organe résilient comprend un joint torique (40).

9. Dispositif (1) selon l'une des revendications précédentes, dans lequel le piston (28) comprend un raccord pour recevoir un outil approprié par lequel le piston (28) peut être mis en rotation à l'intérieur du cylindre (6, 11).

10. Dispositif (1) selon la revendication 9, dans lequel le raccord est une fente pour recevoir la tête d'un outil de raccordement approprié.

11. Dispositif (1) selon l'une des revendications précédentes, dans lequel le ou chaque orifice comprend un canal (7) formé dans le cylindre (6).

12. Dispositif (1) selon l'une des revendications précédentes comprenant en outre une poignée (5) qui comprend un crochet (21).

13. Dispositif (1) selon la revendication 12, dans lequel la poignée (5) est fixée de manière amovible au dispositif (1).
